# EUROPEAN PATENT SPECIFICATION

(11) **EP 1 337 306 B1**
(45) Date of publication and mention of the grant of the patent: **03.06.2009**
(21) Application number: 01972298.2
(22) Date of filing: 02.10.2001
(51) Int. Cl.: B01D 33/00, B01D 33/03, B01D 29/01, B01D 29/05, B01D 29/07

(54) **A SCREEN ASSEMBLY FOR A VIBRATORY SEPARATOR**
SIEBKONSTRUKTION FÜR EINE VIBRATIONSTRENNVORRICHTUNG
ENSEMBLE DE TAMIS POUR SEPARATEUR VIBRANT

(30) Priority: 06.11.2000 US 707277
(43) Date of publication of application: 27.08.2003
(73) Proprietor: Varco I/P, Inc., Houston TX 77042-4200 (US); LUCAS, Brian Ronald, Warlingham, Surrey CR6 9HJ (GB)
(72) Inventor: ADAMS, Thomas, Cole, Hockley, TX 77447 (US); SCHULTE, David, Lee Jr., Broussard, LA 70518 (US); SEYFFERT, Kenneth, Wayne, Houston, TX 77018 (US); LARGENT, David, Wayne, Cleveland, TX 77327 (US); MCCLUNG III, Guy, Lamont, Spring, TX 77379 (US)
(74) Representative: Lucas, Brian Ronald
(86) International application number: PCT/GB2001/004409
(87) International publication number: WO 2002/036237

(56) References cited:
- WO-A-00/64558
- WO-A-01/19492
- WO-A-94/23849
- FR-A- 1 428 628
- US-A- 2 497 902
- US-A- 3 374 888
- US-A- 4 028 230
- US-A- 4 575 421
- US-A- 5 030 350

## Description

This invention relates to a method for manufacturing a screen assembly for a shale shaker, to a vibratory separator apparatus and to a method for separating solids from solids laden drilling fluid.

Vibratory separators have been used for many years to separate particles in a wide array of industrial applications. One common application for vibratory separators is in drilling operations to separate particles suspended in drilling mud. Such vibratory separators are known as shale shakers. If drilled solids are not removed from the drilling mud used during the drilling operation, re-circulation of the drilled solids can create weight, viscosity, and gel problems in the mud, as well as increasing wear on mud pumps and other mechanical equipment used for drilling.

A shale shaker generally includes at least one screen which is generally flat and mounted generally horizontally on a vibrating mechanism or shaker that imparts either a rapidly reciprocating linear, elliptical or circular motion to the screen. A shale shaker may comprise a series of screens arranged in tiered or flat disposition with respect to each other. The screens generally form part of a screen assembly. The screen assemblies are inserted and resiliently suspended or mounted into the shale shaker prior to use. In use, the vibrating mechanism vibrates the screen. Circulated drilling mud is poured on to a back end of the vibrating screen, usually from a pan mounted above the screen. The material generally flows toward the front end of the screen. Large particles are unable to pass through the screen, remaining on top of the screen and moving toward the front of the screen where they are collected. The smaller particles and fluid flows through the screen and collects in a pan beneath the screen. An example of a typical prior art shaker system is shown in U.S. Patent 5,190,645.

A screen assembly may comprise a coarse screen cloth with two or more overlying layers of fine screen cloth. The prior art discloses that the layers may be adhered or bonded together; and that a support, supports, or a perforated or apertured plate or frame may be used beneath the screen or screens. The fineness or coarseness of the mesh of a screen may vary depending upon mud flow rate and the size of the solids to be removed. The screen cloth may be made from wire mesh, which is generally described with reference to the diameter of the wires from which it is woven, the number wires per unit length (called a mesh count) and the shape or size of the openings between wires. Wire mesh comes in various grades. "Market" grade mesh generally has wires of relative large diameter. "Mill" grade has comparatively smaller diameter wires and "bolting cloth" may have the smallest diameter wire. The type of mesh chosen depends on the application.

Many screen assemblies used with shale shakers comprise screens which are flat or nearly flat, i.e. substantially two-dimensional, Other screens, due to corrugated, depressed, or raised surfaces are three-dimensional. U.S. Patents 5,417,793; 5,417,858; and 5,417,859 disclose non-flat screens for use with shale shakers. The three-dimensional screens may comprise one or more layers of screening material overlaying one another. These screens have a lower planar apertured plate with a multiplicity of spaced-apart apertures or openings therethrough. Undersides of troughs of undulating screening material are bonded to the apertured plate.

The layers of screening material need to be held together in order to inhibit excess wear due to, for example, rubbing or clashing.

It is also important to inhibit particles trapping themselves between layers of screening material. A degree of movement between the layers of screening material is required for this purpose, i.e. to have an ability to self clean.

It is also important to join the screen cloths together in a way which maximises screening area of the screens. The shale shakers are a predetermined size and it is advantageous to have the greatest possible screening area therein.

US-A-3,374,888 discloses a screening machine comprising a screen having a fine screen laid on top of a coarse screen and attached together in stretching folds, welts or clamping members. To prevent oscillations and rubbing of the two screen, the screens were fastened or stitched at several locations on their surfaces.

WO 00/64558 discloses a three-dimensional screen comprising a layer of fine mesh, which may be bonded to a coarse mesh, sewed to the coarse mesh, glued to it, welded to it, and/or sintered to it.

U8-A-2,897,902 discloses a screens for a gyrating sifter, the screen comprising a sifting screen loosely supported on a grate of coarsely woven wires. A wear patch is sewed on to the screening cloth.

US-A-4,028,230 discloses a screen for a vibratory separator and fastening a spline to a screen by sewn stitching in place of spot welds.

According to the invention there is provided a method for manufacturing a screen assembly for a shale shaker, the screen assembly comprising at least two layers of screening mesh each of the layers having a plurality of wires, the screen assembly further comprising a screen member comprising a perforate plate,
characterised in that the method comprises the steps of sewing the at least two layers of screening mesh together with sewing material and sewing the two layers to said perforate plate to with sewing material to hold said at least two layers of screening mesh in tension.

Preferably, the at least two layers of screening mesh is arranged above the screen member. Advantageously, said screen member comprises at least one further layer of screening mesh lying underneath the at least two layers of screening mesh. Advantageously, the at least two layers of screening mesh include at least a first fine layer of screening mesh and at least one coarser layer of screening mesh.

Preferably, the method further comprises the step of selecting a needle of such size that in use, said needle penetrates between and moves between adjacent wires of said at least one layer of screening mesh, inhibiting making a dent, gouge, gash, tear or recess therein. Advantageously, the sewing material comprises thread. Preferably, said thread comprises at least one of the following: yarn, twine, string, rope and cord. Advantageously, the method for manufacturing a screen assembly further comprises the step of sewing a pattern of spaced-apart stitches over substantially the entire surface of the at least one layer of screening mesh.

Preferably, the at least one layer of screening mesh comprises a three-dimensional mesh screen. Advantageously, said three-dimensional screen comprises a plurality of alternating ridges and troughs, at least one series of stitches of sewing material ascending up a side of a ridge from a top to a bottom thereof, and the at least one series of stitches having stitch portions projecting out from an outer surface of the ridge for contact by solid particles flowing over the screen assembly to change direction of travel of the solid particles.

Advantageously, the step of sewing the at least two layers of screening mesh together is carried out in a line. Preferably, the method further comprises the steps of applying an expandable material on and corresponding to said line, the sewing material passing through holes in the pattern of expandable material, the expandable material expanded within holes in the at least one layer of screening mesh, such that following extraction of a needle, tearing of the at least one layer of screening material is inhibited. Advantageously, the expandable material comprises one or more of the following: rubber, glue and plastic.

Preferably, multiple stitches of sewing material are made adjacent each other in areas of increased wear of the screen assembly.

The present invention also provides a vibratory separator apparatus comprising a vibratory shaker device and a screen assembly as manufactured by the method of the invention.

The present invention also provides a method for separating solids from solids laden drilling fluid, the method comprising the step of introducing solids laden drilling fluid into a vibratory separator apparatus of the present invention and vibrating the at least one screening assembly to separate solids from the solids laden drilling fluid.

The present invention also provides a screen assembly for a shale shaker, the screen assembly made by the method for manufacturing a screen assembly of the present invention.

For a better understanding of the present invention, reference will now be made, by way of example, to the accompanying drawings, in which:
Figure 1 is a top plan view of a screen assembly in accordance with the present invention, with parts cut away_{;}
Figures 2 and 3 are cross-sectional views of parts of the screen shown in Figure 1;
Figure 4 is a top plan view of a screen assembly in accordance with the present invention, with parts cut away;
Figures 5, 6, 7, 10 and 11 are side cross-sectional views of screen assemblies in accordance with the present invention;
Figure 8 is a top plan view of a screen assembly in accordance with the present invention;
Figure 9 is a top plan view of a screen assembly in accordance with the present invention;
Figures 10 and 11 are not in accordance with the present invention;
Figure 12A and 12B are a schematic view showing steps in a method for making screen assemblies not in accordance with the present invention;
Figure 13 is an enlarged view of part of the schematic shown in Figure 12A;
Figure 14 is a perspective view of an alternative part to that shown in Figure 13;
Figure 15A is a schematic view of part of a screen assembly not in accordance with the present invention;
Figure 15B is a side view of the screen assembly shown in Figure 15A;
Figure 16A is a schematic view of part of the top of a screen assembly in accordance with the present invention; Figure 16B is a side view of the screen assembly of Figure 16A;
Figure 17 is a top plan view of a screen assembly in accordance with the present invention;
Figure 18 is a top plan view of a screen assembly not in accordance with the present invention, with parts cut away;
Figure 19 is a side view of a ridge of a three-dimensional screen assembly in accordance with the present invention;
Figure 20A is a top plan view of a screen assembly not in accordance with the present invention; Figure 20B is an end view of the screen assembly of Figure 20A;

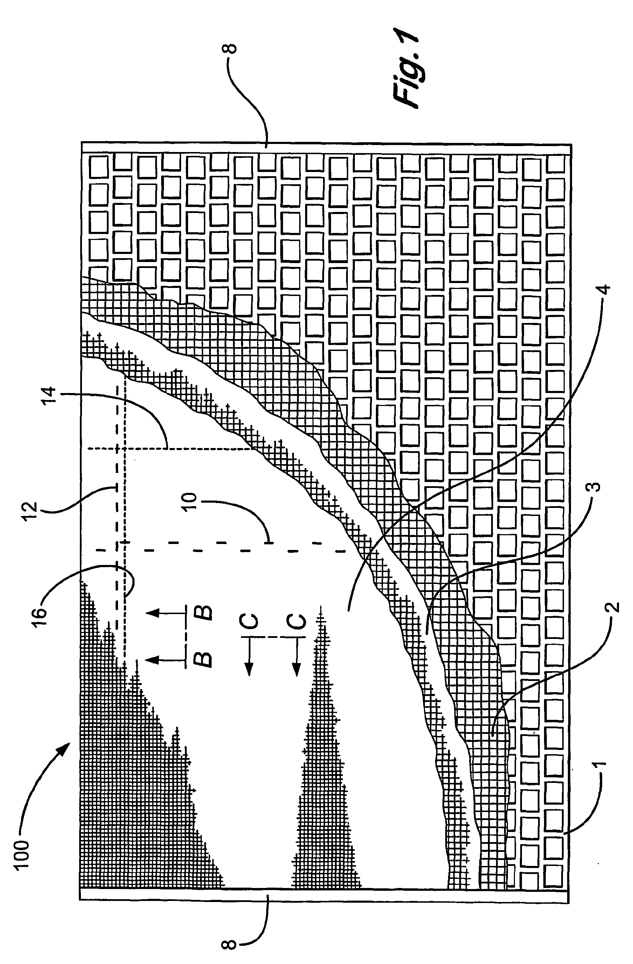

Figure 1 shows a screen assembly 100 with some parts like those of prior art U.S. Patent 4,575,421; however as described below, various parts of the screen assembly 100 are held together by sewing material, for example, thread, wire, string, filaments, cord, twine, yarn or fibre. The screen assembly includes a substantially rigid plate 1, at least rigid enough to hold layers of screening material 2, 3, 4 thereon in tension. The substantially rigid plate has sides 8 and has attachment members formed integrally therewith for attachment, in use, to a shale shaker. A plurality of spaced openings throughout the substantially rigid plate 1 and extending in both directions between the sides, borders on the substantially rigid plate surrounding the openings. Sides 8 may be any known channel-shaped member, hookstrip, or frame sides. Alternatively a rigid frame with four sides may be used, such as the rigid frame described in GB-A-1,578,948. Such a rigid frame may have four members preferably of angle-section forming a rectangle, each member having one flange arranged vertically and the other flange projecting horizontally outwards from the top thereof.

The frame may include at least one T-section reinforcing bar dividing the frame into parts of equal area and arranged parallel to the longer sides of the frames with the upper surface of the horizontal limb in the same plane as the upper surfaces of the horizontal flanges of the side and end members of the frame. There are preferably two such reinforcing bars.

The plurality of layers of screening material 2, 3, and 4 are positioned above a plate 1. The layer of screening material 2 may be of a coarse mesh, whilst the layers 3 and 4 may be of a finer mesh. Layers 3 and 4 may have the same fine mesh, or layer 4 may be of a finer mesh than layer 3 , It is, however, within the scope of this invention to delete any one or two of the layers and for any of the layers 2, 3, 4 to be any screening material or mesh disclosed herein or combination thereof; and it is within the scope of this invention for the plate 1 to be any support plate structure screen, frame, or series of strips (although these things are not legal equivalents) known in the art.

The layers 2, 3, 4 are sewn together by sewing material. Exemplary lines of sewing material 14 and 16 are shown in Figures 1, 2 and 3. It is to be understood that such lines of sewing material sewing the layers together may extend in spaced-apart fashion over substantially all of the surface of the layers 2, 3 and 4 with any desired spacing between lines of sewing material. It is also within the scope of this invention for the sewing material to be in lines that are generally parallel to the sides of the screening layers, as shown; for the sewing material lines to extend diagonally across the screening material; for the sewing material lines to be at an angle other than diagonal across the screening material; and/or for lines of sewing material to intersect, forming any desired pattern including, but not limited to, a pattern corresponding to shapes formed by members of a lower supporting mesh, structure (not shown) or plate 1. This may maximise screening area. Such lines of sewing material may also be used to join together either layers 2 and 3, 2 and 4, and/or layers 3 and 4.

Lines of sewing material 10 and 12 sew together the plate 1 and the layers 2, 3 and 4. The lines 10 and 12 may take any of the forms and positions described above for the lines 14, 16. In one aspect "edge stitching" may be used to sew screening material to the plate 1. It is also within the scope of this invention to sew one, two, three or more layers of screening material to a rigid frame that supports the screening material.

The sewing material used to sew together any two or more layers of screening material and/or mesh, or any support structure and plate with any suitable known sewing material, including, but not limited to, thread, wire, yarn, string, twine, cord, and filament line (any of which may be mono- or multi- strand or filament with different or similar strands or filaments in multicomponent sewing material). Such sewing material may be made, for example, of natural, plastic, or synthetic thread, yarn, cord or wire materials; composite materials; polymer(s); elastomer(s); rubber; phenolic resin(s); metal (including but not limited to steel, stainless steel, bronze, brass, copper, zinc, aluminum and any combination or alloys of them); KEVLAR material; and polytetrafluoroethylene or Teflon material - any of which may be coated with plastic, metal, polymer, elastomer, or resin. Sewing material of any cross-sectional surface area and/or cross-sectional shape (or of any suitable diameter) may be used. Different sewing materials may be used for different stitches and/or lines of stitches on a single screen or screen assembly. The needle(s) used may be any suitable known needle and may be made of any suitable metal, plastic, composite, and/or fibreglass material. In one particular aspect KEVLAR thread with a diameter of .009 inches is used. In one particular screen using such KEVLAR thread there are three layers of screening material sewn together.

The sewing together of any two or more items may be done according to the present invention by a sewing machine. Any known sewing stitch or pattern may be used. In certain aspects a sewing needle is used which is sized so that damage to the layers and/or support is minimized or eliminated. In one such aspect, a needle is selected of such size that it penetrates between and moves between adjacent wires or screen components rather than making a dent, gouge, gash, tear or recess in a wire (or screen component) of a screen and rather than breaking or weakening a wire of a screen.

Any stitch or line of sewing material may, optionally, be deleted from the screen assembly 100 (or from any sewn screen assembly disclosed herein). Between lines like the line 10, lines like the line 14 may be used to hold the layers 2 - 4 together (and likewise for lines like 12 and 16).

U.S. Patent 4,575,421 refers to an adhesive or bonding that secures parts together. The screen 100 may be made with no such adhesive or bonding. Alternatively, such adhesive, (for example, but not limited to, glue or epoxy), or bonding may be used in addition to any sewing material described above; or a combination of one or more spaced-apart lines of sewing material and adhesive between and/or on or beneath such lines may be used. Any two or more metal layers and/or plate may be sintered together over a portion or over substantially all of this area one or more separate, individual stitches or knots of sewing material may be used instead of a line of a continuous thread, etc, for any line of sewing material described herein.

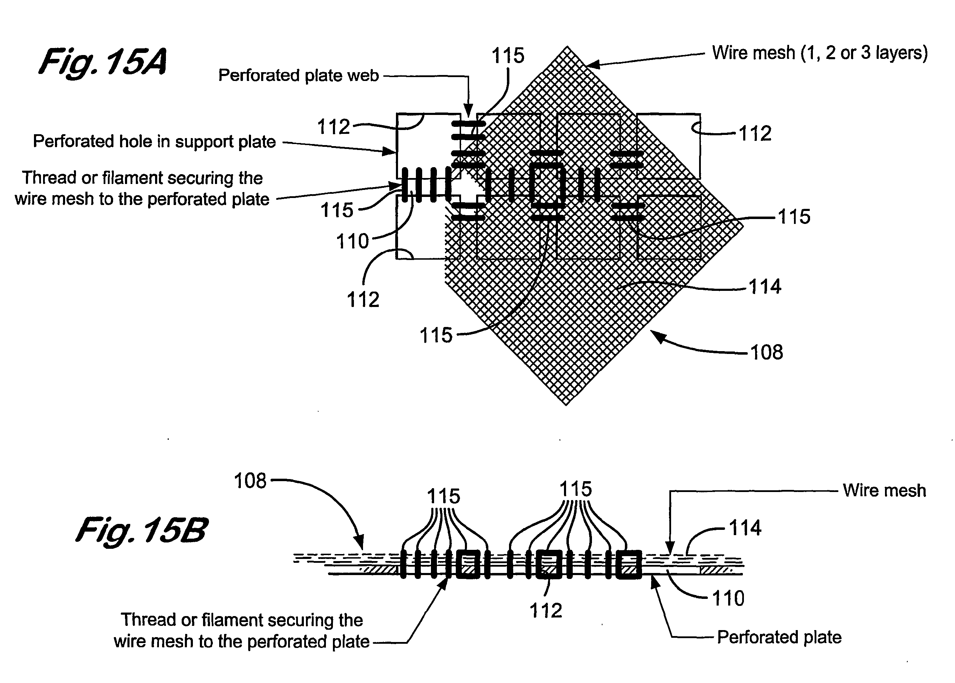

Figures 15A and 15B show screen assembly 108 not according to the present invention with a perforated plate 110 (which may be any plate referred to herein and any plate used in the prior art) which has a plurality of apertures, holes or openings 112 therethrough. A wire mesh layer 114 is secured to the plate 110 with thread stitches (or knots) 115. The layer 114 may be any known suitable mesh or screen, meshes or screens, with one, two, three, or more layers.

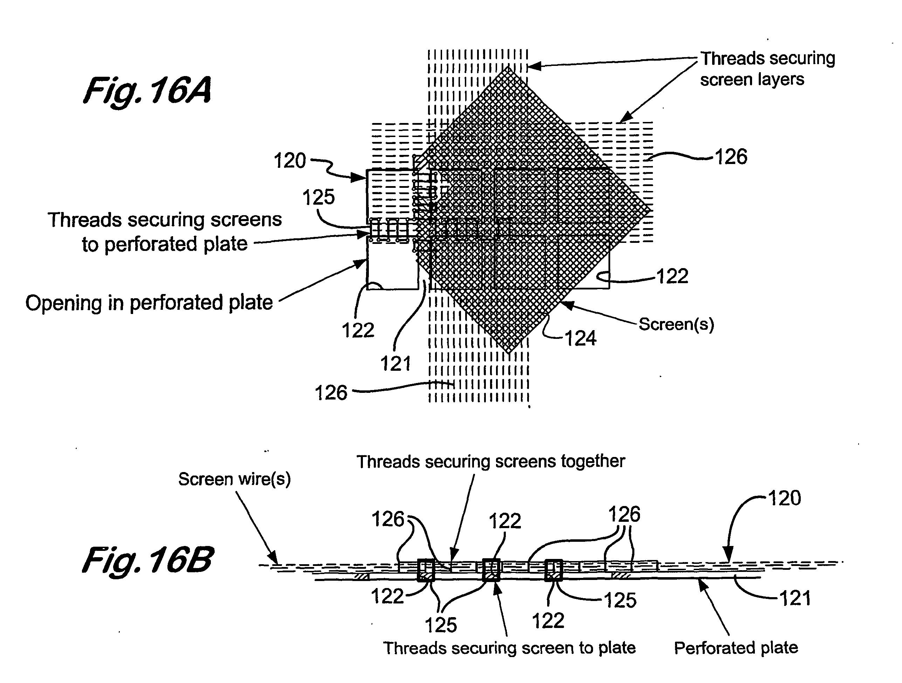

Figures 16A and 16B show a screen assembly 120 according to the present invention with a perforated plate 121 (like the plate 110, Figure 15A) with apertures, etc. 122 therethrough. Wire or screening mesh layers 124 are sewn together with thread stitches (or knots) 126. The layers 124 are sewn to the plate 121 with thread stitches (or knots) 125. Suitable staples may be used for any stitch in the screen assemblies 108 and 120.

The plates and screen assemblies of Figures 15A and 16A are shown partially; but it is to be understood that the apertures, mesh, stitching and plates are on their entire breadth and surfaces as shown partially.

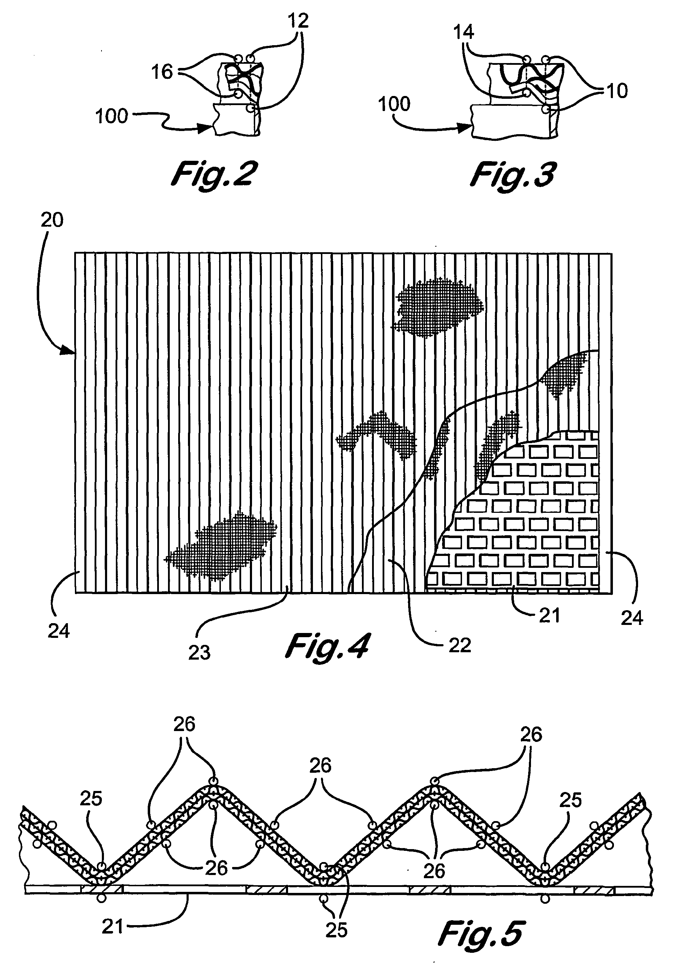

Figures 4 and 5 show a screen assembly 20 according to the present invention, which has parts like those of U.S. Patent 5,417,858 However, as described below, various parts of the screen assembly 20 are held together by sewing material.

The screen assembly 20 has a plate 21 (like the plate 1 described above) on which are positioned a coarse support screen 22 and a fine screening screen 23. The screens 22, 23 may be, respectively, like the layers 32, 33 in U.S. 5,417,858. Optional sides 24 may be like the channel shaped members 23 in U.S. 5,417,858 or may be any known hookstrip or frame sides.

Sewing material 25 is used to sew and secure the layers 22, 23 to the plate 21; and sewing material 26 may be used to sew and secure the layers 22 and 23 together. As shown the size (diameter) of the sewing materials 25, 26 (and also of the material of the sewing lines in Figures 1 -3) is, for some embodiments, greatly exaggerated and could be depicted by a single point in the drawing; but it is within the scope of the present invention to use sewing material - yarn, cord, line, thread, wire, etc. - of any suitable diameter. Either individual separate stitches or knots of sewing material may be used for the screen assembly 20 (and for any screen assembly disclosed herein); or lines of sewing material in any desired stitch or stitch pattern (e.g. as the lines of the screen assembly 100) may be used.

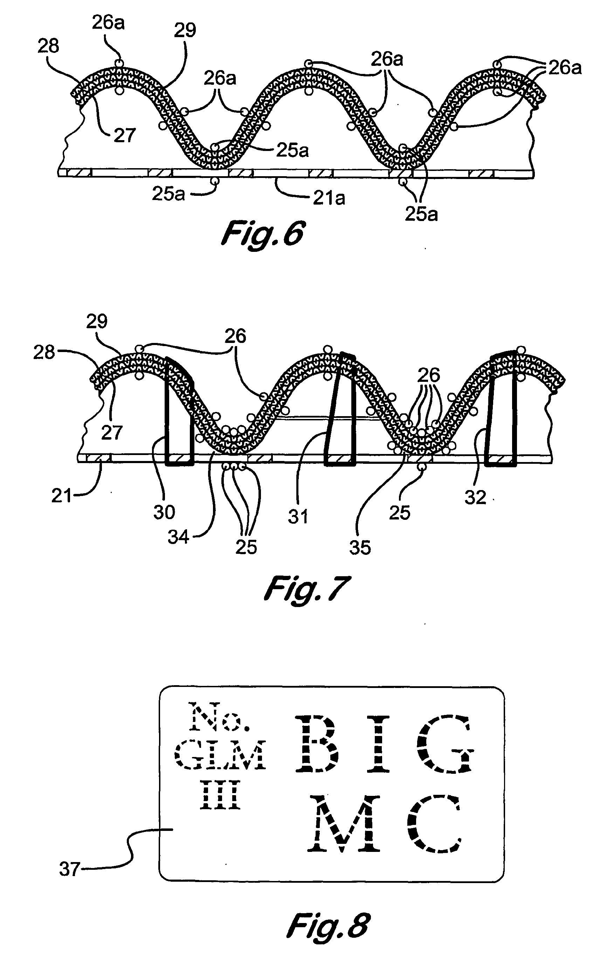

Figure 6 shows an alternative configuration for the layers of screening material in which ridges and valleys have a more rounded shape (viewed in cross-section) as compared to the screening material of Figure 5. Also, optionally, a third layer of screening material 27 is beneath two upper layers of screening material 28, 29. A plate 21a is like the plate 21, Figure 4. Sewing material 25a is like sewing material 25 of Figure 4 and sewing material 26a is like sewing material 26, Figure 4. The layers 27 - 29 may be as the layers 77, 79, 80 in U.S. Patent 5,417,858; or they may be made of any desired screening material and/or mesh, metal or synthetic, as may be any layer disclosed herein. In addition to securement together with sewn sewing material, any part or substantially all of the surface area of the layers around openings in the plate 21 may be bonded or adhered with suitable material, glue or adhesive.

Figure 7 illustrates a version of the screen assembly of Figure 6 in which one or more individual stitches 30, 31, 32 extends through and from the screening layers 27, 28, 29 to and through holes or perforations the plate 21 beneath and within ridges formed by the undulating shape of the screening material. Any desired number of such individual stitches or knots may be used within a ridge, e.g. one, two, three, four, five, or more; or a series of them may be beneath a ridge extending from one end thereof to the other. Also, the sewing material may extend through all the layers of screening material or through only one or two layers. If the sewing material is metal and the plate is also, the sewing material may be sintered to the plate; similarly, with metal screening material and metal sewing material the sewing material may be sintered to the screening material.

Figure 7 also illustrates that an area of excessive wear or abrasion in a screen assembly (any according to the present invention) may have a plurality of either individual stitches or knots of sewing material or a line of a plurality of sewn stitches. As shown in the leftmost valley 34 of Figure G, three stitches of sewing material 25 are located in the valley. As shown in the right-most valley 35 five stitches of sewing material 26 secure the screening layers together at this location, Also, the tops of ridges of an undulating or corrugated screen assembly may have such a plurality of stitches or knots, an individual stitch or knot, or an individual staple or staples. It is within the scope of this invention to use any desired number of stitches and/or lines of stitches in any area of a screen assembly and, in one aspect, to do so for areas of anticipated excessive wear and abrasion.

Figure 8 illustrates that according to the present invention a screen identifier - "No. GLM III" - and/or a logo or trademark - "BIG MC" - can be sewn into a screen 37. The screen 37 can be single or multi-layer (and can be any screen assembly disclosed herein).

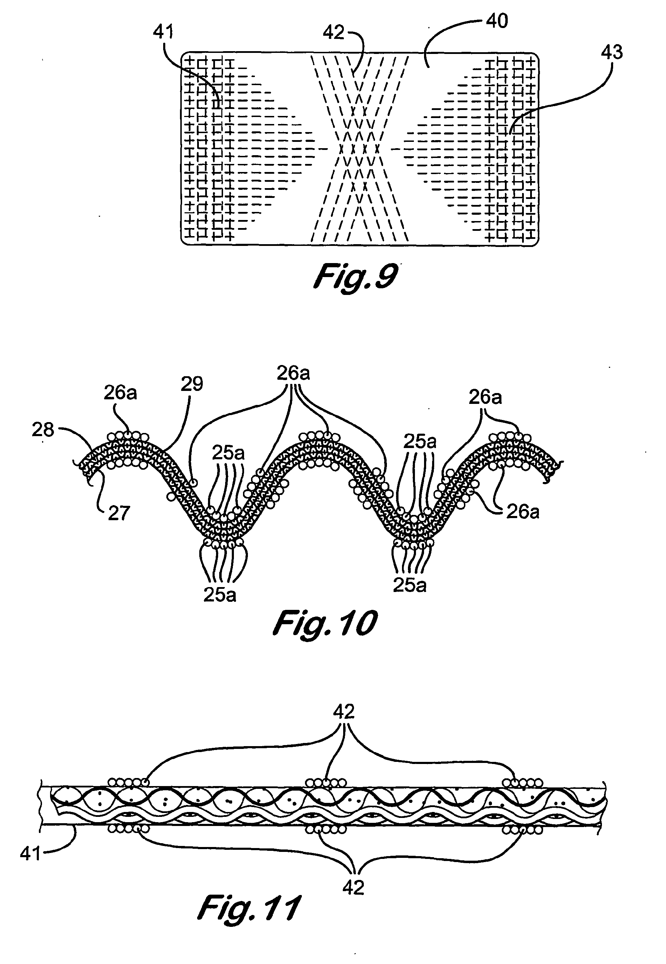

Figure 9 illustrates a screen 40 according to the present invention which has different stitching patterns 41, 42, 43 with different stitch densities in different areas of a screens. The screen 40 may be any screen or screen assembly disclosed herein and the sewing material for the stitches may be any sewing material disclosed herein. Any one or two of the patterns 41 - 43 may be deleted. It is also within the scope of this invention to use any desired pattern of stitching at any location on a screen.

Figure 10 shows a version of a screen as in Figure 6 but with no plate 21, and thus not in accordance with the present invention. Pluralities of lines (as viewed from above) of stitching material 25a and 26a extend across the screen assembly from one side to the other. Other lines (not shown) may be provided at an angle or perpendicular to these lines of material 25a and 26a.

Figure 11 shows a flat screen 41 with layers as in U.S. 4,575,421 (or any multi-layer screen disclosed or referred to herein), but with no lower plate, and thus not in accordance with the present invention. Lines of stitching 42 extend across the screen 41 from one side to the other. Other lines (not shown) may be provided at an angle or perpendicular to the lines 42. As shown in Figure 6, a stitch or line of sewing material 45 may be used to prevent a ridge of screening material from expanding and/or flattening. Any desired number of such lines or stitches may be used along the length of a ridge (including any ridge or ridges of a series of ridges on any screen including any screens disclosed herein).

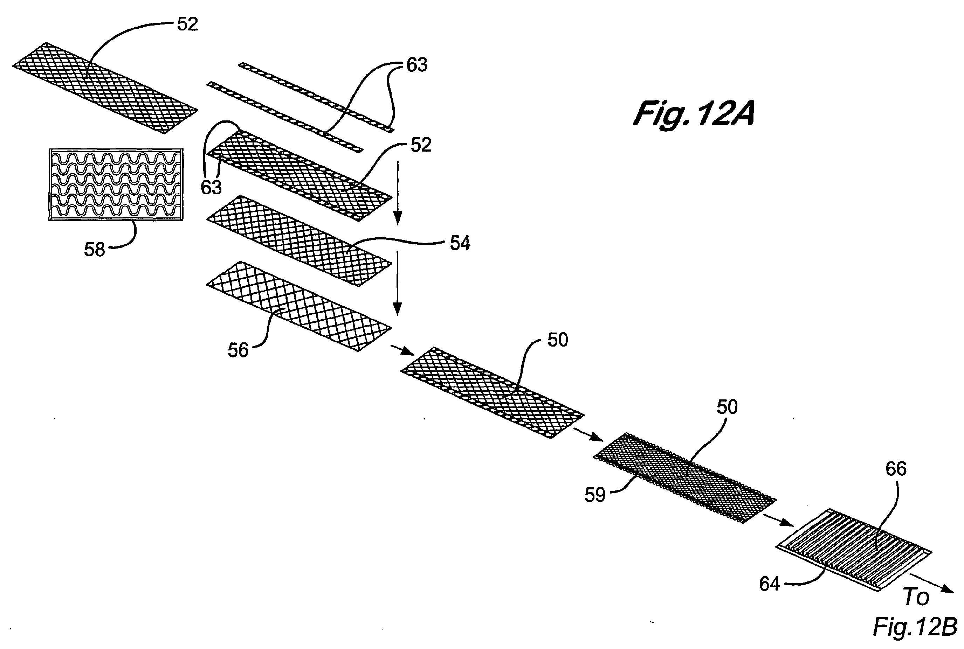

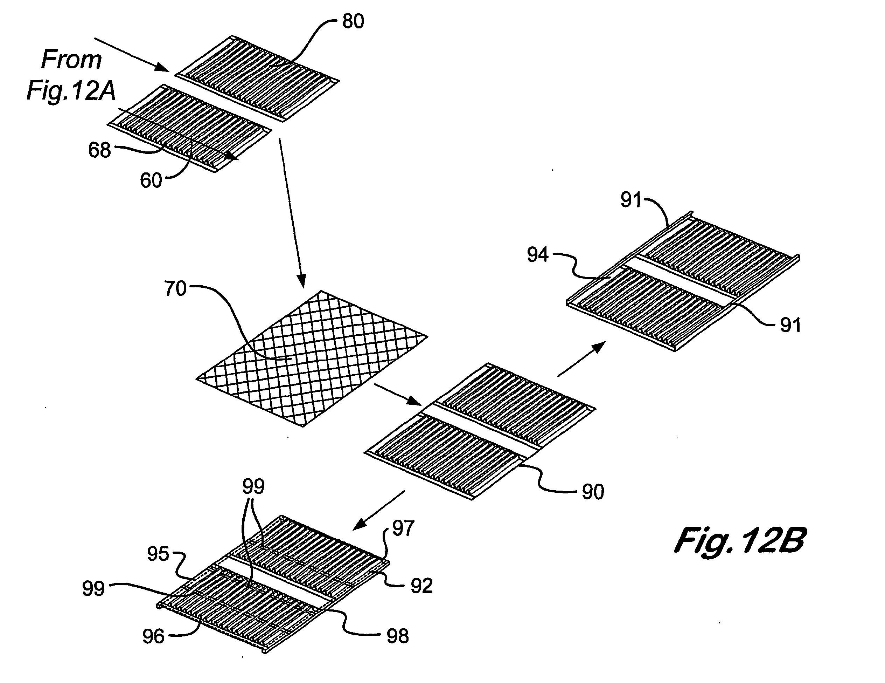

Figures 12A and 12B illustrate steps in a method for producing screen assemblies not according to the present invention. A piece of screening material 52 of relatively fine mesh (e.g., but not limited to, 24 mesh to 500 mesh; made, for example, of metal, steel, stainless steel, natural fibre such as cotton, or synthetic material such as nylon, polyester, polypropylene, polyethylene, or KEVLAR material) is combined with a piece of screening material 54 of a medium mesh (e.g., but not limited to, 32 mesh to 400 mesh made, e.g. of the materials as for piece 52) and a piece of screening material 56 of coarse mesh (e.g., but not limited to, 1 mesh to 30 mesh made, e.g., of the materials as for piece 52).

An additional layer of screening material as any of the pieces 52, 54, 56 may, beadded and positioned on top of any of the other pieces present. Any of the pieces 52, 54, or 56 may be deleted. The straight sides of the glue pattern 58 may be deleted.

Optionally a glue pattern, e.g. as in the glue pattern 58 is applied to the screening material piece 52. Alternatively, or additionally, such a glue pattern is applied to piece 54 and/or piece 56. Glue (or any suitable plastic, flexible adhesive, or fusible material) in any pattern or configuration may be used for the glue pattern. In certain aspects a glue pattern is applied over substantially the entire area of piece(s) of screening material, in one aspect to coincide with a stitching pattern, so that it a. inhibits during handling or use tearing of screening material between stitches and/or holes made by a sewing needle; b. seals around sewing material, etc.; and/or c. so that glue "heals" holes made by a sewing needle passing through the glue when the needle is retracted - i.e., the glue around a hole tends to contract somewhat back into the hole reducing the hole size or substantially closing off the hole. Glues and materials that may be used include any known in the art, any disclosed above, and, PUR glues, polyethylene, rubber, nylon, plastic, polyurethane, silicone, any suitable adhesive and epoxy. Optionally a piece of solid plastic corresponding to the stitching pattern, with or without perforations over its surface area, is used instead of or in addition to a glue pattern. Any glue, epoxy, or other adhesive may be used solely to prevent tearing; or it may also, in certain aspects, be applied in such a manner that it also bonds screening layers together and/or to a lower plate, frame, or support. A solid plastic piece may be moulded with perforations or the perforations may be made after the piece is made.

Optionally strips 63 of screening material may be applied along edges of the piece 52 (and/or along edges of any of the other pieces 54, 56) for a purpose described in detail below. The strips 63 are also shown on the piece 52.

The combined structure 50 (including pieces 52, 54, 56) is glued or bonded together or sewn together in any manner as described herein using any stitch or sewing pattern as described herein. In one aspect, the stitching follows the glue pattern 58 with the needle or needles piercing the glue. Such a structure, without further processing, is substantially flat and may be used in a substantially flat screen assembly. pieces 52, 54 or 56 may be sown together and glued or bonded to the other piece.

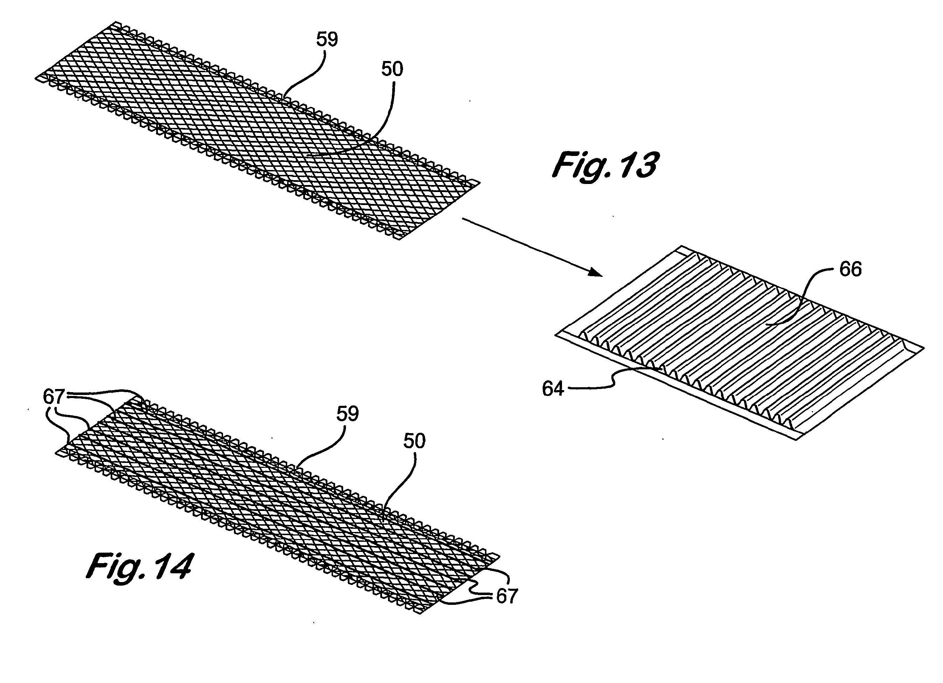

In one aspect the structure 50 is, optionally, notched, with notches 59 along its edges, and is also corrugated, as shown in Figure 13. As shown in Figure 14, prior to corrugating, one or more splines of epoxy or plastic 67 may be applied to the structure for added strength and rigidity. Alternatively or in addition to the splines, additional lines of sewing stitches may be used. Ends 64 of ridges 66 of the corrugated structure are either plugged, covered with material (perforated or non-perforated, solid or mesh or screening material), or, as shown, ends 68 (see Figure 13) are formed of the screening material. Alternatively, an additional strip or strips of screening material, mesh, or a combination thereof (as described above) are added (e.g., but not limited to the strips 63) and the ridge end coverings are formed of these strips. In one aspect the formed ends are the ends and/or bulbous ends described in co-owned pending PCT Publication No. WO 01/19492. Any screen or screen assembly in PCT Publication No. WO 01/19492 may have layers connected together by sewing as described herein.

The resulting structure 60 may, be combined with a lower support mesh piece 70 [e.g. made of steel, wire, composite, or other suitable (zinc, brass, bronze, aluminium, or any alloy thereof or combination thereof) material or metal with mesh ranging between one mesh and ten mesh, in one aspect four mesh] or with a lower support plate or series of support strips, Flat top wire cloth may be used for the piece 70.

In one aspect a screen assembly 80 (like the structure 60) is mounted with the structure 60 on a piece 70, producing a screen assembly 90 (like screen assemblies disclosed in PCT Publication No. WO 01/19492. The piece 70 is connected to the other parts by sewing as described herein. A settling area between the two screen structures 60 and 80 may be provided with one or more flat layers of screen cloth, which may be secured to the lower support mesh piece 70 by sewing and/or gluing as described herein.

A version 94 of the screen assembly 90 has side hookstrips 91 for mounting of the screen assembly to a vibratory separator for liquid/solid and/or solid/solid separation e.g., but not limited to, a shale shaker for treating drilling fluid or mud with drilling solids, debris, and/or cuttings entrained therein. A version 92 of the screen asembly 90 includes a frame with sides 95, 96, 97 and 98. Optionally cross support members 99 may be included in the frame.

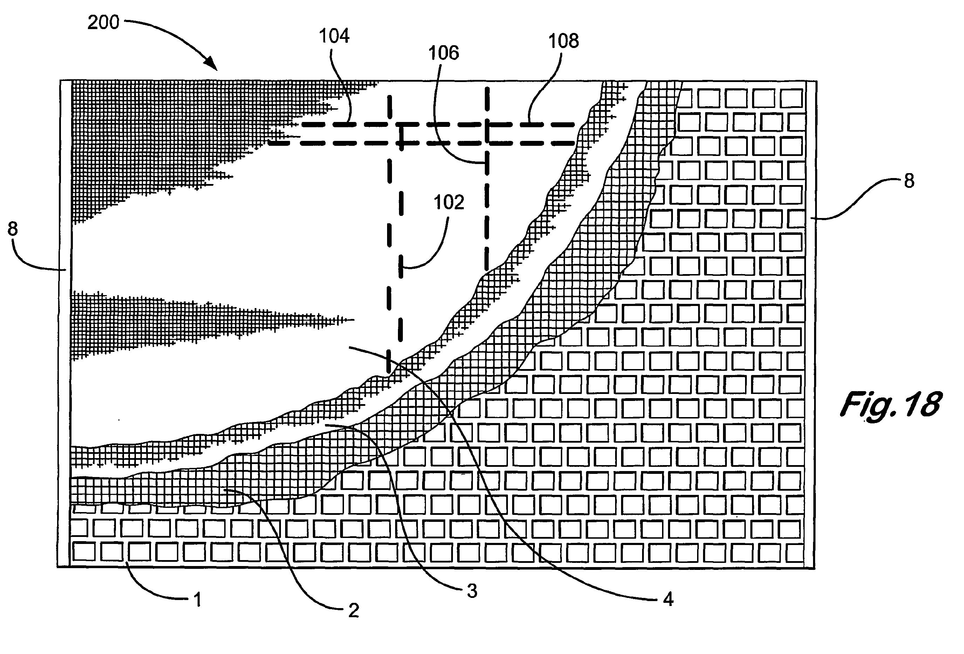

Figure 18 shows a screen assembly 200 similar but not according to the present invention which is like the screen assembly of Figure 1 (like numerals indicate like parts). Instead of the thread and stitching of the screen assembly of Figure 1, the screen assembly 200 has lines of staples (or rivets) 102, 104, 106 and 108.

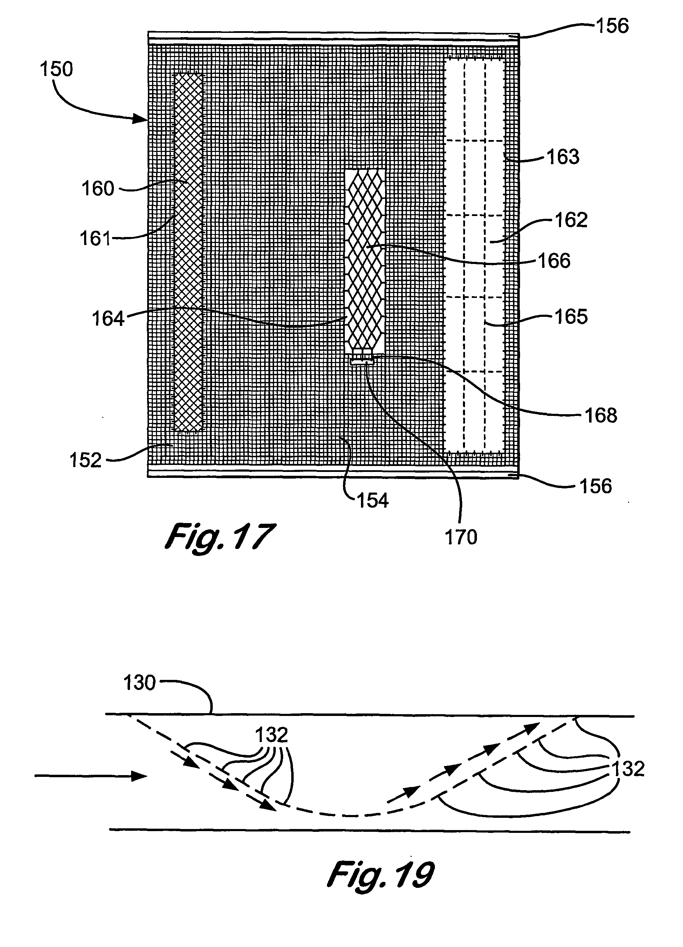

In certain aspects the sewing material, such as thread, etc. used for three-dimensional screens and screen assemblies of the present invention is used in such a pattern and location that it presents a projecting series of thread parts that project out from ridges of a screen. Viewing such a ridge 130 from the side as shown in Figure 19, the thread portions 132 direct solids flowing generally in the direction of the arrow in Figure 19 up or down the ridge. This increases the length of travel of these solids from one end of the screen to the other (they do not travel in a straight line across the screen) and thereby increases their time on the screen surface so that liquids have more time to leave the solids and pass through the screen.

Any ramp base or portion described above that is connected to a screen, mesh, or layers thereof may be connected by sewing (or staples) above as described above; or in addition to the connection or securement method previously described sewing (or staples) as described above may also be used.

Figure 17 shows a screen assembly 150 according to the present invention which has a layer of screening material 152 over a series of support strips 154. Side hook strips 156 provide for mounting of the screen assembly. The screening material 152 may be: any screening material or mesh disclosed herein or any combination of layers thereof disclosed herein or any suitable layer or layers of screening material.

A piece 160 of screening materials is sewn (or connected with rivets and/or staples) to the screening material 152 with stitching 161. A solid piece of material 162 is sewn to the screening material 152 with stitching 163, 165. A perforated piece of material 164 with a plurality of perforations 166 is sewn to the screening material 152. Any one or two of the pieces 160, 162, 164 may be deleted. Stitches 168 sewing the piece 164 are surrounded by an amount of glue 170 that extends around stitch holes through the piece 164 and around portions of stitches through the screening material 152.

It is within the scope of this invention for any hole for any sewing material, rivet or staple to have such glue as glue 170 around it or any other material that will contract around the sewing material, etc. upon removal of a needle and will contract around a part of a rivet or staple to help "heal" a hole and to seal around the material, etc.

It is within the scope of this invention to have a plurality of pieces like the piece 160 (two, three, four, five, six or more) spaced-apart on the screening material 152. Similarly there may be multiple pieces 162 and/or 164 in any position or desired combination with or without pieces 160. In certain aspects a piece or pieces 160, 162, and/or 164 are wed at locations of relatively high or excessive screen wear. Any such piece or pieces may be used on any two-dimensional or three-dimensional screen, either on top of or beneath (or both) screening material.

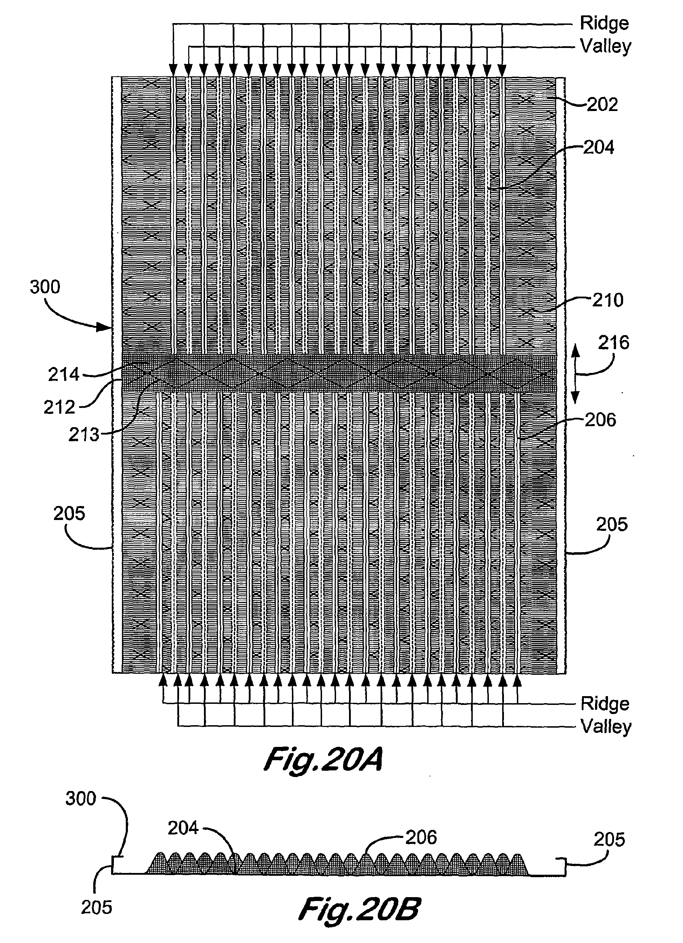

Figures 20A and 20B show a screen assembly 300 not according to the present invention which has a layer 202 of coarse mesh and side hooks strips 205. On the coarse mesh layer 202 are sewn two offset series of ridges/valleys 204, 206, similar to that shown in Figure 12B.

Sewing material 210 is sewn in a desired pattern across substantially all of the surface area (as viewed from above as in Figure 20A) of the screen assembly.

A middle portion or strip 212 of the screen assembly 300 includes a layer 214 of fine mesh (e.g. but not limited to 200 mesh) on a layer of less-fine mesh (e.g. but not limited to 19 mesh, not shown). These two layers extend for a length 216. A similar strip (like the strip 212) is used at each end 218, 219 of the screen assembly 300 between the ridge/valley parts and the coarse layer 202.

The sewing material 210 may be used only in selected areas of the screen assembly instead of over substantially all of its area. Glue or other material may be used in the same pattern as the stitching to close off and/or "heal" or seal holes or the area around the outer surface of stitching material (or rivets or staples). In one aspect the sewing material is KEVLAR thread between 1.6mm and 1.15mm (0.063 and 0.045 inches) in diameter. Thread of circular, oval, or elliptical cross-section may be used. For any screen or screen assembly herein, the sewing material may be any thread, including but not limited to moisture-resistant or moisture-absorbing thread or may be any wire of circular, oval, or elliptical cross-section. In another aspect, ends of peaks and valleys, instead of being located at the end boundaries of the screen assembly as shown in Figure 20A, are spaced-apart from their ends. In one particular aspect of such a screen assembly, the peaks and valleys ends are formed integrally of screening material that is pushed out from an initial relatively flat layer or layers so that there are never any open ends that need to be closed off or sealed (as for the example the open ends of the screen assemblies of U.S. Patents 5,417,793; 5,417,858; 5,417,859).

The screen 300 the ridge/valley portions 204, 206 may be made from multi-layer pieces of screening material sewn together with ridges with integral bulbous ends pushed out from the screening material. The ridge/valley portions 204, 206 are then placed on the strips 212 and the end strips (like the strip 212) and sewn thereto. The resulting structure is then sewn to the layer 202. Alternatively the structure may be produced by gluing or using epoxy to bond layers together (which is not the legal equivalent of mechanically connecting the layers together with sewing material, rivets, or staples), Alternatively the structure (sewn or bonded) may be connected to the coarse layer by gluing or using epoxy - or both methods may be used on a single screen assembly.

In any screen recording to the present invention sewing material is used instead of glue, epoxy, or plastic and the surface area of the thread presented to material to be treated is less than that of the glue, epoxy, or plastic, hence there is much more increased open area of screening material for screening the material to be treated. Also with such a screen according to the present invention there is more relative movement between layers which tends to reduce or prevent screens blinding and plugging. Certain pipe dopes stick to plastic on a screen and inhibit the conveyance of solids - which is reduced by using non-plastic sewing material in certain screens according to the present invention. Screen assemblies with different thread or other sewing material can be quickly changed in response to changes in conditions such as temperature changes, fluid changes, or chemical changes. Alternatively, or in addition to sewing the pieces of the strips 212 and the end strips together, the pieces may be bonded together with epoxy 213. Similarly epoxy may be used to bond the layer 202 to the other parts. The ends of the ridge/valley portions 204, 206 (when there are initially open ends) may be closed off in any known manner with plugs, screening material, etc. In certain aspects this may be done with screening material of a mesh size like that of the ridge/valley portions. Sewing material, rivets, and staples are not the legal equivalent of each other, Any ramp disclosed herein may be attached to a lower support or lower layer by any sewing method disclosed herein (or by rivets and/or staples). Any end of any screen disclosed herein that is initially open may be closed off and/or sealed by connecting material over the open end by any sewing method and/or rivets, and/or staples disclosed herein.

## Claims

1. A method for manufacturing a screen assembly for a shale shaker, the screen assembly comprising at least two layers of screening mesh each of the layers having a plurality of wires, the screen assembly further comprising a screen member comprising a perforate plate, **characterised in that** the method comprises the steps of sewing the at least two layers of screening mesh together with sewing material and sewing the two layers to said perforate plate with sewing material to hold said at least two layers of screening mesh in tension.

2. A method for manufacturing a screen assembly as claimed in Claim 1, wherein said at least two layers of screening mesh is arranged above the screens member.

3. A method for manufacturing a screen assembly as claimed in Claim 2, wherein said screen member comprises at least one further layer of screening mesh lying underneath said at least two layers of screening mesh.

4. A method for manufacturing a screen assembly as claimed in any preceding claim, wherein said at least two layers of screening mesh include at least a first fine layer of screening mesh and at least one coarser layer of screening mesh.

5. A method for manufacturing a screen assembly as claimed in any preceding claim, further comprising the step of selecting a needle of such size that in use, said needle penetrates between and moves between adjacent wires of said at least one layer of screening mesh, inhibiting making a dent, gouge, gash, tear or recess therein.

6. A method for manufacturing a screen assembly as claimed in any preceding claim, wherein the sewing material comprises thread.

7. A method for manufacturing a screen as claimed in Claim 6, wherein said thread comprises at least one of the following; yarn, twine, string, rope and cord.

8. A method for manufacturing a screen assembly as claimed in any preceding Claim, further comprising the step of sewing a pattern of spaced-apart stitches over substantially the entire surface of the at least one layer of screening mesh.

9. A method for manufacturing a screen assembly as claimed in any preceding claim, wherein the at least one layer of screening mesh comprises a three-dimensional mesh screen.

10. A method for manufacturing a screen assembly as claimed in Claim 9, wherein said three-dimensional screen comprises a plurality of alternating ridges and troughs, at least one, series of stitches of sewing material ascending up a side of a ridge from a top to a bottom thereof, and the at least one series of stitches having stitch portions projecting out from an outer surface of the ridge for contact by solid particles flowing over the screen assembly to change direction of travel of the solid particles.

11. A method for manufacturing a screen assembly as claimed in any preceding Claim, wherein the step of sewing the at least two layers of screening mesh together is carried out in a line.

12. A method for manufacturing a screen assembly as claimed in Claim 11, further comprising the steps of applying an expandable material on and corresponding to said line, the sewing material passing through holes in a pattern of expandable material, the expandable material expanded within holes in the at least one layer of screening mesh, such that following extraction of a needle, tearing of the at least one layer of screening material is inhibited.

13. A method for manufacturing a screen as claimed in Claim 12, wherein said expandable material comprises one or more of the following: rubber, glue and plastic,

14. A method for manufacturing a screen assembly as claimed in any preceding claim, further comprising multiple stitches of sewing material adjacent each other in areas of increased wear of the screen assembly.

15. A screen assembly made by the method as claimed in any of claims 1 to 14.

16. A vibratory separator apparatus comprising a vibratory shaker device and a screen assembly as claimed in claim 15.

17. A method for separating solids from solids laden drilling fluid, the method comprising the step of introducing solids laden drilling fluid into a vibratory separator apparatus of as claimed in Claim 16 and vibrating the at least one screening assembly to separate solids from the solids laden drilling fluid.

## Patentansprüche

1. Verfahren zum Herstellen einer Siebanordnung für ein Schlammschüttelsieb, wobei die Siebanordnung wenigstens zwei Siebgitterlagen umfasst, wovon jede mehrere Drähte besitzt, wobei die Siebanordnung ferner ein Siebelement umfasst, das eine Lochplatte enthält, **dadurch gekennzeichnet, dass** das Verfahren die Schritte des Zusammennähens der wenigstens zwei Siebgitterlagen mit Nähmaterial und des Annähens der zwei Lagen an die Lochplatte mit Nähmaterial, um die wenigstens zwei Siebgitterlagen unter Spannung zu halten, umfasst.

2. Verfahren zum Herstellen einer Siebanordnung nach Anspruch 1, wobei die wenigstens zwei Siebgitterlagen über dem Siebelement angeordnet sind.

3. Verfahren zum Herstellen einer Siebanordnung nach Anspruch 2, wobei das Siebelement wenigstens eine weitere Siebgitterlage umfasst, die unter den wenigstens zwei Siebgitterlagen liegt.

4. Verfahren zum Herstellen einer Siebanordnung nach einem vorhergehenden Anspruch, wobei die wenigstens zwei Siebgitterlagen wenigstens eine erste feine Siebgitterlage und wenigstens eine grobere Siebgitterlage umfassen.

5. Verfahren zum Herstellen einer Siebanordnung nach einem vorhergehenden Anspruch, das ferner den Schritt des Auswählens einer Nadel mit einer Größe, derart, dass im Gebrauch die Nadel zwischen benachbarte Drähte der wenigstens einen Siebgitterlage eindringt und sich zwischen ihnen bewegt, umfasst, wodurch die Bildung eines Zackens, einer Rille, einer Lücke, eines Risses oder einer Aussparung darin verhindert wird.

6. Verfahren zum Herstellen einer Siebanordnung nach einem vorhergehenden Anspruch, wobei das Nähmaterial Faden umfasst.

7. Verfahren zum Herstellen eines Siebs nach Anspruch 6, wobei der Faden wenigstens eines der Folgenden umfasst: Garn, Zwirn, Schnur, Seil, Strick.

8. Verfahren zum Herstellen einer Siebanordnung nach einem vorhergehenden Anspruch, das ferner den Schritt des Nähens eines Musters aus beabstandeten Maschen über im Wesentlichen der gesamten Oberfläche der wenigstens einen Siebgitterlage umfasst.

9. Verfahren zum Herstellen einer Siebanordnung nach einem vorhergehenden Anspruch, wobei die wenigstens eine Siebgitterlage ein dreidimensionales Gittersieb umfasst.

10. Verfahren zum Herstellen einer Siebanordnung nach Anspruch 9, wobei das dreidimensionale Sieb mehrere abwechselnde Stege und Rinnen umfasst, wobei wenigstens eine Reihe von Maschen aus Nähmaterial auf einer Seite eines Stegs von einer Oberseite zu einer Unterseite aufsteigt, wobei die wenigstens eine Reihe von Maschen Maschenabschnitte besitzt, die von einer äußeren Oberfläche des Stegs nach außen vorstehen, um einen Kontakt mit Feststoffpartikeln herzustellen, die über die Siebanordnung fließen, um die Bewegungsrichtung der Feststoffpartikel zu ändern.

11. Verfahren zum Herstellen einer Siebanordnung nach einem vorhergehenden Anspruch, wobei der Schritt des Vernähens der wenigstens zwei Siebgitterlagen in einer Linie ausgeführt wird.

12. Verfahren zum Herstellen einer Siebanordnung nach Anspruch 11, das ferner die Schritte des Aufbringens eines ausdehnbaren Materials auf die Linie entsprechend dieser Linie umfasst, wobei sich das Nähmaterial durch Löcher in einem Muster aus ausdehnbarem Material bewegt, wobei das ausdehnbare Material in Löchern in der wenigstens einen Siebgitterlage ausgedehnt wird, derart, dass beim folgenden Herausziehen einer Nadel ein Zerreißen der wenigstens einen Siebmateriallage verhindert wird.

13. Verfahren zum Herstellen eines Siebs nach Anspruch 12, wobei das ausdehnbare Material eines oder mehrere der folgenden Materialien umfasst: Gummi, Klebstoff und Kunststoff.

14. Verfahren zum Herstellen einer Siebanordnung nach einem vorhergehenden Anspruch, das ferner mehrere Maschen aus Nähmaterial benachbart zueinander in Bereichen erhöhten Verschleißes der Siebanordnung umfasst.

15. Siebanordnung, die durch das Verfahren nach einem der Ansprüche 1 bis 14 hergestellt ist.

16. Vibrationstrennvorrichtung, die eine Vibrationsschüttelvorrichtung und eine Siebanordnung nach Anspruch 15 umfasst.

17. Verfahren zum Trennen von Feststoffen von feststoffhaltigem Bohrfluid,
wobei das Verfahren den Schritt des Einleitens von feststoffhaltigem Bohrfluid in eine Vibrationstrennvorrichtung nach Anspruch 16 und das Versetzen der wenigstens einen Siebanordnung in Schwingungen umfasst, um Feststoffe von dem feststoffhaltigen Bohrfluid zu trennen.

## Revendications

1. Procédé de fabrication d'un ensemble de tamis pour un séparateur vibrant, l'ensemble de tamis comportant au moins deux couches de treillis de tamisage, chacune des couches ayant une pluralité de fils métalliques, l'ensemble de tamis comprenant, de plus, un élément de tamis supplémentaire comportant une plaque perforée, **caractérisé en ce que** le procédé comprend les étapes consistant à relier les, au moins deux, couches de treillis de tamisage avec un matériau de liaison et à relier les deux couches à ladite plaque perforée avec un matériau de liaison pour maintenir lesdites, au moins deux, couches de treillis de tamisage en tension.

2. Procédé de fabrication d'un ensemble de tamis selon la revendication 1, dans lequel lesdites, au moins deux, couches de treillis de tamisage sont agencées au-dessus de l'élément de tamis.

3. Procédé de fabrication d'un ensemble de tamis selon la revendication 2, dans lequel ledit élément de tamis comprend au moins une couche supplémentaire de treillis de tamisage reposant au-dessous desdites, au moins deux, couches de treillis de tamisage.

4. Procédé de fabrication d'un ensemble de tamis selon l'une quelconque des revendications précédentes, dans lequel lesdites, au moins deux, couches de treillis de tamisage comportent au moins une première couche à mailles fines de treillis de tamisage et au moins une couche à mailles plus grossières de treillis de tamisage.

5. Procédé de fabrication d'un ensemble de tamis selon l'une quelconque des revendications précédentes, comprenant, de plus, l'étape consistant à sélectionner une aiguille d'une dimension telle que, lors de l'utilisation, ladite aiguille pénètre entre, et se déplace entre, les fils métalliques adjacents de ladite au moins une couche de treillis de tamisage, empêchant qu'une indentation, une rayure, une coupure, une déchirure ou un évidement ne s'y forment.

6. Procédé de fabrication d'un ensemble de tamis selon l'une quelconque des revendications précédentes, dans lequel le matériau de liaison comprend un fil.

7. Procédé de fabrication d'un tamis selon la revendication 6, dans lequel ledit fil comporte au moins l'un de ce qui suit : fil textile, ficelle, corde boyau, fil métallique, et cordon.

8. Procédé de fabrication d'un ensemble de tamis selon l'une quelconque des revendications précédentes comprenant, de plus, l'étape consistant à relier une configuration de piqûres espacées les unes des autres sur sensiblement toute la surface de la, au moins une, couche de treillis de tamisage.

9. Procédé de fabrication d'un ensemble de tamis selon l'une quelconque des revendications précédentes, dans lequel la, au moins une, couche de treillis de tamisage comporte un tamis à mailles tridimensionnel.

10. Procédé de fabrication d'un ensemble de tamis selon la revendication 9, dans lequel ledit tamis tridimensionnel comporte une pluralité de nervures en relief et de parties en creux, en alternance, une série au moins de piqûres avec le matériau de liaison montant sur un côté d'une nervure du haut vers le bas de celle-ci, et la, au moins une, série de piqûres ayant des parties de piqûre s'avançant à partir d'une surface extérieure de la nervure en vue d'être en contact avec des particules solides s'écoulant sur l'ensemble de tamis afin de modifier la direction de circulation des particules solides.

11. Procédé de fabrication d'un ensemble de tamis selon l'une quelconque des revendications précédentes, dans lequel l'étape consistant à relier ensemble les au moins deux couches de treillis de tamisage est exécutée suivant une ligne.

12. Procédé de fabrication d'un ensemble de tamis selon la revendication 11, comprenant, de plus, les étapes consistant à appliquer un matériau expansible sur ladite ligne, et correspondant à celle-ci, le matériau de liaison passant à travers les trous selon une configuration de matériau expansible, le matériau expansible étant expansé à l'intérieur des trous dans la, au moins une, couche de treillis de tamisage, de telle sorte que, faisant suite à l'extraction d'une aiguille, une déchirure de la, au moins une, couche de matériau de tamisage est empêchée.

13. Procédé de fabrication d'un tamis selon la revendication 12, dans lequel ledit matériau expansible comporte l'un ou plusieurs des éléments suivants : caoutchouc, colle et matière plastique.

14. Procédé de fabrication d'un ensemble de tamis selon l'une quelconque des revendications précédentes, comprenant, de plus, de multiples piqûres avec le matériau de liaison adjacentes les unes aux autres dans des zones d'usure accrue de l'ensemble de tamis.

15. Ensemble de tamis réalisé par le procédé selon l'une quelconque des revendications 1 à 14.

16. Appareil de séparateur vibrant comprenant un dispositif de séparateur vibrant et un ensemble de tamis selon la revendication 15.

17. Procédé pour séparer des matières solides d'un fluide de forage chargé en matières solides, le procédé comprenant l'étape consistant à introduire un fluide de forage chargé en matières solides dans un appareil de séparateur vibrant selon la revendication 16 et à faire vibrer le, au moins un, ensemble de tamisage pour séparer les matières solides à partir du fluide de forage chargé en matières solides.
